# EUROPEAN PATENT APPLICATION

(11) **EP 1 929 887 A1**
(43) Date of publication of application: **11.06.2008**
(21) Application number: 06122568.6
(22) Date of filing: 19.10.2006
(51) Int. Cl.: A23P 1/08

(54) **Crumb coating**

(71) Applicant: Birds Eye IP Co Ltd, London E14 5JJ (GB)
(72) Inventor: McBride, Malcolm John c/o Unilerver UKCR Ltd, Shambrook, Bedford MK44 1LQ (GB); Hedges, Nicholas David c/o Unilerver UKCR Ltd, Shambrook, Bedford MK44 1LQ (GB); Mayling, Deborah Elizabeth c/o Unilerver UKCR Ltd, Shambrook, Bedford MK44 1LQ (GB)
(74) Representative: Cornish, Kristina Victoria Joy

(57) **Abstract**

Frozen coated food products, such as coated fish fillets, can be re-heated conveniently re-heated by frying in a pan. In this way a crispy product can be re-produced as any moisture which may have impregnated the crumb either by migration from the core of the food product during the re-heating process or by sublimation during frozen storage can be driven off. Microwave ovens do not heat the crumb to a sufficiently high temperature to drive out any accumulated moisture and, hence when re-heated in a microwave oven, the food products tend to be characterised by having soggy or rubbery coatings

The aforementioned problem is solved by the provision of a crumb coating comprising:
(a) crumb; and
(b) ungelatinised starch powder;

wherein the weight ratio of crumb to ungelatinised starch powder is less than 85:15 according to the pick-up test.

## Description

This invention relates to a crumb coating, in particular to a crumb coating with reduced moisture absorption thereby to render it suitable for microwave applications. The invention also relates to a method of manufacturing the inventive crumb and its application to a food product thereby to produce a coated food product.

Frozen coated food products which can be re-heated conveniently such as coated fish fillets are preferably re-heated by frying in a pan. In this way a crispy product can be reproduced as any moisture which may have impregnated the crumb either by migration from the core of the food product during the re-heating process or by sublimation during frozen storage can be driven off.

There is, however, an increasing demand by consumers for such a product which can be re-heated in a microwave oven. However microwave ovens do not heat the crumb to a sufficiently high temperature to drive out any accumulated moisture and, hence when re-heated in a microwave oven, the food products tend to be characterised by having soggy or rubbery coatings.

An additional problem encountered with any fried food is the need to minimise oil pick-up.

### Summary of the invention

The aforementioned problems are solved by the provision in one aspect of the invention of a crumb coating comprising:
(a) crumb; and
(b) ungelatinised starch powder;
wherein the weight ratio of crumb to ungelatinised starch powder is less than 85:15 according to the pick-up test.

The crumb is a porous crumb impregnated with ungelatinised starch powder which renders ordinarily moisture absorbent crumb resistant to such absorption. Hence the crumb will maintain its crispness during microwave reheating on any food product coated by the crumb and also under prolonged frozen storage. It is also thought that the ungelatinised starch powder prevents absorption of excess quantities of oil into the pores of the porous crumb during any frying process. It is important that the starch remains ungelatinised, that is to say that the starch maintains its crystalline structure as measured by light microscopy using polarised light (i.e. the starch is birefringent). In contrast gelatinised starch will absorb large quantities of moisture during manufacture and storage and would therefore be unsuitable for rendering the crumb more resistant to absorption of moisture during cooking by the consumer.

Preferably the weight ratio of crumb to ungelatinised starch powder is less than or equal to 80:20, more preferably less than or equal to 85:15. Suitable crumb is bread crumb, particularly when prepared from vacuum baked dough.

The ungelatinised starch powder can be selected from potato, tapioca, corn and rice starch.

In another aspect of the invention, a coated food product is provided comprising:
(a) a food product impregnated with an alkaline agent thereby to produce an impregnated food product; and
(b) a coating of a crumb coating according to the invention.

The alkaline agent raises the pH of the food product slightly by about 0.3 pH units and prevents water loss from the food product. The alkaline agent may comprise one or more of sodium bicarbonate, potassium bicarbonate, sodium carbonate, potassium carbonate, calcium carbonate, magnesium bicarbonate, diphosphates, triphosphates and polyphosphates. Examples of diphosphates, triphosphates and polyphosphates include disodium diphosphate, dipotassium diphosphate, tetrasodium diphosphate, tetrapotassium diphosphate, pentasodium tripolyphosphate, pentapotassium tripolyphosphate, sodium polyphosphate and potassium polyphosphate. Preferably the alkaline agent is sodium bicarbonate. The food product may be selected from fish, chicken, shellfish, squid, pork, lamb, beef or any whole muscle or comminuted meat product. Preferably the food product is fish.

Preferably the coated food product is relatively flat, with a height-to-width ratio of less than 0.6 and more preferably less than 0.55. It is thought that more moisture can be driven off from a coated food product with this height-to-width ratio during microwave re-heating.

Optionally the coated food product may comprise a pre-dust coated directly onto the impregnated food product. The pre-dust may comprise an ungelatinised starch such as one or more of wheat starch, potato starch, tapioca starch, corn starch, rice starch, wheat flour, corn flour or rice flour. The ungelatinised starch does not absorb water when cold but when heated gelatinises and absorbs water from the food product. When the coated food product is pre-fried (where the crumb coating is darkened and, if present, any batter is set, whilst keeping the food product uncooked), the ungelatinised starch remains essentially ungelatinised, but when the coated food product is re-heated by the consumer, the ungelatinised starch gelatinises and absorbs moisture from the surface of the food product as it cooks.

Optionally the coated food product may comprise a batter to which the crumb coating is directly coated. Preferably the batter is a tempura batter. The advantage of a tempura batter is that as this type of batter is aerated, the crumb coating is placed at a greater distance from the food product than would be the case for a non-aerated batter and thus is less likely to absorb moisture from the food product. Use of a tempura batter furthermore allows pre-frying of the coated food product in such a way as to brown the crumb coating without cooking the food product.

In a further aspect of the invention, a coated food product system is provided comprising the coated food product of the invention and a susceptor tray upon which the coated food product is placed.

Another aspect of the invention is a method of manufacturing the crumb coating of the invention comprising the step of mixing the crumb and ungelatinised starch powder at room temperature.

### Detailed Description of the Invention

### The Pick-Up Test

The Pick-up test involves the following steps:
(a) 200 grams of crumb are sieved and the fraction <1 mm (fines) discarded;
(b) 100 grams of the remainder is mixed with 10 grams of ungelatinised starch powder;
(c) the mixture is then passed through a sieve and the fraction <1mm (the fraction of ungelatinised starch powder which is not trapped in the pores of the crumb) weighed (A grams);
(d) the percentage pick-up is given by ((10-A)/10)x100.

The percentage pick-up of ungelatinised rice starch powder and ungelatinised potato starch powder on two crumbs, Monet flake (Newly Weds Foods Limited) and Centurion (Newly Weds Foods Limited), were determined in accordance with the foregoing method and the results are summarised in table 1 hereinbelow.

**Table 1: Percentage pick-up of Monet flake and Centurion crumb.**

| | **Monet Flake** | **% weight starch retained with crumb** | **Centurion** | **% weight starch retained with crumb** |
|---|---|---|---|---|
| % weight of fines (4 repeats) | 23.5,24,25,25.5 | | 45.5,46.5,52.5,54.5 | |
| Rice starch fraction <1mm (g) | 7.4 | 26 | 8.5 | 15 |
| Farina fraction <1mm (g) | 7.3 | 27 | 9 | 10 |

The results show that the Monet flake crumb has far superior pick-up and is thus more porous than the Centurion crumb.

The invention will now be illustrated with reference to the examples hereinbelow.

### Example 1

Frozen mini (16(W)x11 (H)x50(L)mm) fingers of Alaskan pollack were prepared by:
(a) forming the fresh Alaskan pollack fillets (obtained from Frozen Fish International GmbH) into standard 7.5 kg blocks of approximate dimensions of 254x63x482mm
(b) freezing the blocks at below minus (-) 30 degrees Centigrade; and
(c) cutting the frozen blocks into mini fingers.

The mini fingers were then coated in a tempura batter (Kerry Ingredients (UK) Limited) and then coated either with a porous bread crumb (Monet Flake from Newly Weds Foods Limited) (run 1 in table 2) or the same bread crumb impregnated according to the invention with 15% by crumb coating weight ungelatinised food grade potato starch powder (Avebe Group UK Limited) (run 2 in table 2). Table 2 summarises the batter and bread crumb or crumb coating weights for each finger of frozen Alaskan pollack.

**Table 2: Batter, batter and crumb/crumb coating a up-take and % fat content of mini fingers.**

| **Run number** | **Crumb** | **Fish core weight** | **Fish + batter (batter)** | **Fish + batter + crumb (crumb)** | **After frying** | **% weight fat content of mini fingers** |
|---|---|---|---|---|---|---|
| 1 | Monet crumb | 114.5 | 165.5 (51.0) | - | - | 12.7 |
| | Monet crumb | 119.0 | - | 186.8 (16.8) | 206.9 | - |
| 2 | Monet including 15% by weight potato starch | 117.4 | 160.0 (42.6) | | | 11.5 |
| | Monet including 15% by weight potato starch | 112.6 | - | 185.6 (30.4) | 196.7 | - |

Thereafter the mini fingers were fried at 200 degrees Centigrade for 25 seconds in sunflower oil. The temperatures of the product on leaving the fryer were 82 degrees Centigrade on the surface of the mini fingers, 54 degrees Centigrade in the tempura batter and 0.6 degrees Centigrade on the surface of the fish, which remained substantially frozen (and uncooked).

The percentage weight fat content of the mini fingers was determined by solvent extraction of fifteen homogenised mini fingers. The results, summarised in table 2, indicate that the mini fingers with the starch impregnated crumb have a lower oil pick-up than those with the unimpregnated crumb.

The percentage weight oil uptake of the crumb/crumb coating was determined gravimetrically by first discarding the fraction of crumb which has a particle size <1mm. Then nine parts of the retained crumb was mixed with one part of ungelatinised food grade potato starch powder (Avebe Group UK Limited). Then the treated crumb was placed in a sieve and weighed. The weighed sieve and treated crumb were subsequently immersed directly into sunflower oil at 200 degrees Centigrade. After 25 seconds the sieve and treated crumb were removed from the oil, blotted with tissue paper and then reweighed. A comparative experiment was conducted with untreated crumb. The results, summarised in table 3, support the percentage weight fat content results in table 2 indicating that the starch impregnated crumb (treated) has a lower oil pick-up than the unimpregnated crumb (untreated). It is believed that the starch powder physically blocks ingress of oil into the crumb pores reducing oil absorption.

**Table 3: Oil uptake of crumb.**

| **Crumb/crumb coating** | **Sieve (g)** | **Sieve + crumb/crumb coating before frying (g)** | **Sieve + crumb/crumb coating after frying (g**) | **Oil uptake (%)** |
|---|---|---|---|---|
| Monet crumb | 135.34 | 145.35 | 153.00 | 76.5 |
| Monet crumb | 137.23 | 147.23 | 154.09 | 68.6 |
| Monet crumb | 137.72 | 147.72 | 154.55 | 68.3 |
| Monet including 10% by weight potato starch | 137.72 | 147.72 | 154.26 | 64.4 |
| Monet including 10% by weight potato starch | 138.04 | 148.04 | 155.50 | 64.6 |
| Monet including 10% by weight potato starch | 137.90 | 147.90 | 154.17 | 62.7 |

The crispness of the fried mini fingers was then determined and after 6 and 18 weeks of frozen storage at minus (-) 18 degrees Centigrade by re-heating the fried mini fingers in a microwave oven. The procedure involved removing six mini fingers from frozen storage and placing them on a susceptor tray with an optical density of 0.25-0.27 (Graphics Packaging International Incorporated). The mini fingers were heated, from frozen, in a microwave oven for 165 seconds at 850 Watts (Whirlpool Combi4) to achieve a core temperature of above 75 degrees Centigrade. The mini fingers were then allowed to stand at room temperature for two minutes to allow steam to evaporate from the surface of the mini fingers. The mini fingers were then tasted immediately and the results are summarised in table 4.

**Table 4: Results of storage trials of fried mini fingers at minus (-) 18 degrees Centigrade.**

| **Run number** | **Number of mini fingers** | **Colour** | **0 weeks** | **6 weeks** | **12 weeks** |
|---|---|---|---|---|---|
| 1 | **6** | Golden brown | Very crisp | Crisp | Not soggy but not exactly crisp |
| 2 | **6** | Golden | Very crisp with | Crisp | Slightly crisper |
| | | brown | extra crispy bits | | but quality much reduced from last assessment. |

The results show that the crumb coating of the invention (run 2) shows superior crispness after 12 weeks frozen storage at minus (-) 18 degrees Centigrade than the non-impregnated porous bread crumb (run 1). This is thought to be because the ungelatinised starch powder gelatinises on heating absorbing moisture from its surroundings, thereby swelling and blocking the pores in the crumb preventing absorption of moisture through the pores by the crumb.

### Example 2

Frozen standard (21(W)x11(H)x84(L)mm) and mini (16(W)x11 (H)x50(L)mm) fingers of cod were prepared by:
(a) tumbling cod fillets (obtained from Glenrose Fish Company Limited) with ungelatinised potato starch powder (Avebe Group UK Limited) in a vacuum tumbler (Redmond MC25) for fifteen minutes at 7 rpm;
(b) forming the fresh cod fillets into industry standard 7.5kg blocks
(c) freezing the blocks at below minus (-) 30 degrees Centigrade; and
(d) cutting the frozen blocks into standard and mini fingers.

The level of ungelatinised potato starch powder in the tumbled cod fillets was 2.5% by weight. The role of the ungelatinised potato starch powder is to gelatinise when the consumer re-heats the fingers and intercept and absorb any moisture which might ordinarily migrate from the core of the frozen fish to the batter and crumb rendering the crumb soggy.

All the fingers were then coated with a tempura batter (Kerry Ingredients (UK) Limited) and then coated with a porous bread crumb (Monet Flake from Newly Weds Foods Limited). The batter and bread crumb weights were determined in the same way as described in example 1 and averaged for ten sets of results. Table 5 summarises the batter and bread crumb weights for standard and mini fingers without ungelatinised potato starch powder (control fingers).

**Table 5: Batter and bread crumb up-take for control fingers (average of 10)**

| **Finger size** | **Weight of fish** | **Weight of batter** | **Weight of crumb** |
|---|---|---|---|
| Mini | 10.5 | 4.8 | 1.5 |
| Standard | 16.0 | 8.5 | 2.2 |

Thereafter the fingers were fried at 200 degrees Centigrade for 30 seconds in sunflower oil. The crispness of the fried fingers was then determined after 4, 7 and 16 weeks of frozen storage at minus (-) 9 degrees Centigrade by re-heating the fried fingers in a microwave oven The procedure involved removing the fingers from storage at minus (-) 9 degrees Centigrade and placing them in a minus (-) 18 degrees Centigrade freezer to equilibrate for three hours. Six mini fingers or four standard fingers were removed from frozen storage (at minus (-) 18 degrees Centigrade) and placed on a susceptor tray with an optical density of 0.25-0.27 (Graphics Packaging International Incorporated). The fingers were then heated, from frozen, in a microwave oven for 165 seconds at 850 Watts (Whirlpool Combi4) to achieve a core temperature of above 75 degrees Centigrade. The fingers were then allowed to stand at room temperature for two minutes to allow steam to evaporate from the surface of the mini fingers. The mini fingers were then tasted immediately and the results are summarised in table 6.

**Table 6: Results of storage trials of fried mini and standard fish fingers at minus (-) 9 degrees Centigrade.**

| **Finger size** | **4 weeks** | **7 weeks** | **16 weeks** |
|---|---|---|---|
| Mini | Some crispness | Slightly chewy, not crisp but not soggy | Very slight crispness, also slightly chewy |
| Standard | Quite crisp | Slightly more crisp | Also slightly more crisp than for mini finger |

The crispness of the fried fingers was then also determined after 3, 4 and 6.5 months of frozen storage at minus (-) 18 degrees Centigrade by re-heating the fried mini fingers in a microwave oven. The procedure was identical to that described hereinabove for fingers stored at minus (-) 9 degrees Centigrade except without the equilibration step. The fingers were then tasted immediately and the results are summarised in table 7.

**Table 7: Results of storage trials of fried mini and standard fingers at minus (-) 18 degrees Centigrade.**

| **Finger size** | **3months** | **4 months** | **6.5 months** |
|---|---|---|---|
| Mini | Slightly crisp, no sogginess | Some crispiness. | Very slight crispness |
| Standard | Crisp | Crisp | Slightly crispier than for mini finger |

The results show that the bread crumb on the standard finger shows superior crispness after 16 weeks frozen storage at minus (-) 9 degrees Centigrade or 6.5 months frozen storage at minus (-) 18 degrees Centigrade than the bread crumb on the mini finger. This is thought to be because the standard finger is relatively flat, with a height-to-width ratio more suited to driving off more moisture during microwave re-heating.

## Claims

1. A crumb coating comprising:
(a) crumb; and
(b) ungelatinised starch powder;
wherein the weight ratio of crumb to ungelatinised starch powder is less than 85:15 according to the pick-up test.

2. A crumb coating according to claim 1 wherein the ungelatinised starch powder is selected from potato, tapioca, corn and rice starch.

3. A crumb coating according to claim 1 or claim 2 wherein the weight ratio of crumb to ungelatinised starch powder is less than or equal to 80:20.

4. A crumb coating according to any one of the preceding claims wherein the crumb is bread crumb.

5. A crumb coating according to claim 4 wherein the bread crumb is prepared from vacuum baked dough.

6. A coated food product comprising:
(a) a food product impregnated with an alkaline agent thereby to produce an impregnated food product; and
(b) a coating of a crumb coating according to any one of the preceding claims.

7. A coated food product according to claim 6 wherein the alkaline agent comprises one or more of sodium bicarbonate, potassium bicarbonate, sodium carbonate, potassium carbonate, calcium carbonate, magnesium bicarbonate, diphosphates, triphosphates and polyphosphates.

8. A coated food product according to claim 6 or claim 7 wherein the food product comprises any one of fish, chicken, shellfish, squid, pork, lamb, beef or any whole muscle or comminuted meat product.

9. A coated food product according to any one of claims 6 to 8 with a height-to-width ratio of less than 0.6.

10. A coated food product to any one of claims 6 to 9 comprising a pre-dust coated directly onto the impregnated food product.

11. A coated food product according to claim 10 wherein the pre-dust comprises an ungelatinised starch.

12. A coated food product to any one of claims 6 to 11 comprising a batter to which the crumb coating is directly coated.

13. A coated food product according to claim 12 wherein the batter is a tempura batter.

14. A coated food product system comprising a coated food product in accordance with any one of claims 6 to 13 and a susceptor tray upon which the coated food product is placed.

15. A method of manufacturing a crumb coating according to any one of claims 1 to 5 comprising the step of mixing the crumb and ungelatinised starch powder at room temperature.
